Europäisches Patentamt

European Patent Office

Office européen des brevets

(11) Publication number: **0 063 264**
**B1**

# EUROPEAN PATENT SPECIFICATION

(45) Date of publication of patent specification: **12.12.84**

(21) Application number: 82102641.6

(22) Date of filing: **14.04.81**

(60) Publication number of the earlier application in accordance with Art. 76 EPC: **0 038 078**

(51) Int. Cl.³: **H 01 C 7/22,** H 01 C 17/12, H 01 C 13/00, G 01 N 27/12, G 01 K 7/18

(54) **Method for the manufacture of a temperature sensitive platinum thin film resistance element.**

(30) Priority: 16.04.80 JP 49204/80
16.04.80 JP 49205/80
16.04.80 JP 49206/80
16.04.80 JP 49207/80
16.04.80 JP 49208/80
17.12.80 JP 177220/80

(43) Date of publication of application:
**27.10.82 Bulletin 82/43**

(45) Publication of the grant of the patent:
**12.12.84 Bulletin 84/50**

(84) Designated Contracting States:
**DE FR GB NL**

(56) References cited:
**US-A-3 676 188**
**US-A-3 845 443**

(73) Proprietor: **KABUSHIKI KAISHA KIRK**
**16-1, Nishi-shinbashi 2-chome Minato-ku**
**Tokyo (JP)**

(72) Inventor: **Yoshio, Ohno**
**4643-2, Midorigaoka**
**Zama-shi Kanagawa (JP)**

(74) Representative: **Blumbach Weser Bergen Kramer Zwirner Hoffmann Patentanwälte**
**Radeckestrasse 43**
**D-8000 München 60 (DE)**

## Description

The present invention relates to a method for the manufacture of a temperature sensitive platinum thin film resistance element for use in a temperature sensor and a gas sensor. As a resistance thermometer for use in temperature sensors, there has heretofore been employed a platinum winding resistance element or negative temperature coefficient temperature sensitive resistance element (for example a thermistor). These elements, however, have various defects. Also gas sensors employing such conventional resistance elements or such thermistors have various defects.

From US—A—3 845 443 a resistance thermometer is known comprising a rigid support substrat coated with glass in which is bonded and hermetically sealed a narrow thin film of metal in meandering or serpentine configuration. In the method for producing the known thermometer first a substrate is coated with a high alumina glass precoat layer by RF sputtering. In the next step a thin film of platinum is deposited over the precoat layer by RF sputtering. This sputtering operation is preferably performed in an atmosphere of 99,999 percent pure argon at an absolute pressure of 10 microns and wherein 200 Watts RF power is applied to a platinum source for 170 seconds. Then the thin film of platinum is masked to provide the desired resistance pattern. The unmasked portion of the platinum film is RF sputter etched away by using the unmasked platinum as the source. By this a narrow thin-film of platinum for the resistance element having a width in the order of 80 $\mu$m and a thickness in the order of 80 nm is achieved. After welding electrical leads to the resistance a high alumina glass top coat is applied to it and to the entire top surface of the substrate by RF sputtering. This top coat is to set the grain structure of the resistance and to prevent resistance drift with time. In a final step the complete assembly is heat soaked at a temperature of approximately 815°C to sinter the resistance to the glass layers.

Without such top coat it has been almost impossible to produce continuous, uniform thin film of platinum, because usually a sputtered platinum film has a rough grain structure which is unstable. Therefore, it is necessary to anneal the sputtered film. In order to obtain a continuous, dense platinum film various approaches to an idea annealing have been tried unsuccessfully due to re-evaporation of the unstable structure of the film. With the above-mentioned known resistance thermometer this problem has been solved by over-coating the platinum thin film with said top coat in order to suppress the re-evaporation of platinum grain.

The invention as claimed is intended to remedy these drawbacks without making such top coat absolutely necessary. The object of the invention is to provide a method for the manufacture of a temperature sensitive platinum thin film resistance element the resistance value of which can easily be made large and stable.

This object is achieved by a method as claimed in claim 1.

According to the present invention, a platinum thin film is deposited on the surface of an insulating substrate of, for example, a cylindrical or columnar configuration and a pair of lead wires are electrically connected to both end portions of the platinum thin film and fixed to the insulating substrate. The platinum thin film is deposited by sputtering to a thickness of 10 to 100 mm (0.01 to 0.1 $\mu$m). The insulating substrate is required to have a smooth surface and stand heat aging at 1000°C. The power for the sputtering is selected to be 0.7 W/cm² preferably 0.8 W/cm² or more so as to ensure the adhesion of the platinum thin film to the insulating substrate. The platinum thin film thus deposited on the insulating substrate is stabilized by heat aging, raising temperature from about 100°C up to around 1000°C in a stepwise manner. Thereafter, a spiral kerf is formed in the platinum thin film to obtain thereacross a required resistance value. The abovesaid lead wires are attached to both end portions of the platinum thin film.

In this way, a stable platinum thin film resistance element is obtained which has a resistance value of several tens of ohms to scores of kilo-ohms. The platinum thin film resistance element thus obtained is combined, as a temperature sensor, with a resistance element having no temperature coefficient to form a bridge circuit, by which temperature can be measured with high accuracy. Further, a temperature sensor free from the influence of the lead wires can be obtained with a simple construction.

By forming on the platinum thin film a metal oxide semiconductor film capable of adsorbing and releasing a gas to be sensed and selecting the resistance value of the metal oxide semiconductor film to be sufficiently larger than the resistance value of the platinum thin film, it is possible to obtain a platinum thin film resistance element which is capable of gas detection with a linear and hence reproducible detection sensitivity characteristic.

One way of carrying out the invention is described in detail below with reference to drawings which illustrate only one specific embodiment.

Figures 1A to 1F are explanatory of a manufacturing method of a platinum thin film resistance element according to the present invention, Figures 1A, 1B and 1D being sectional views and Figures 1C, 1E and 1F being front views;

Figure 2A is an enlarged diagram showing a platinum thin film formed on an alumina substrate;

Figure 2B is an enlarged diagram showing a platinum thin film formed on a transparent fused quartz substrate;

Figure 3 is a graph showing resistance-temperature characteristics of a platinum thin film resistance element and a thermistor;

Figure 4 is a diagram illustrating a bridge circuit for measuring a resistance variation of the platinum thin film resistance element of the present invention;

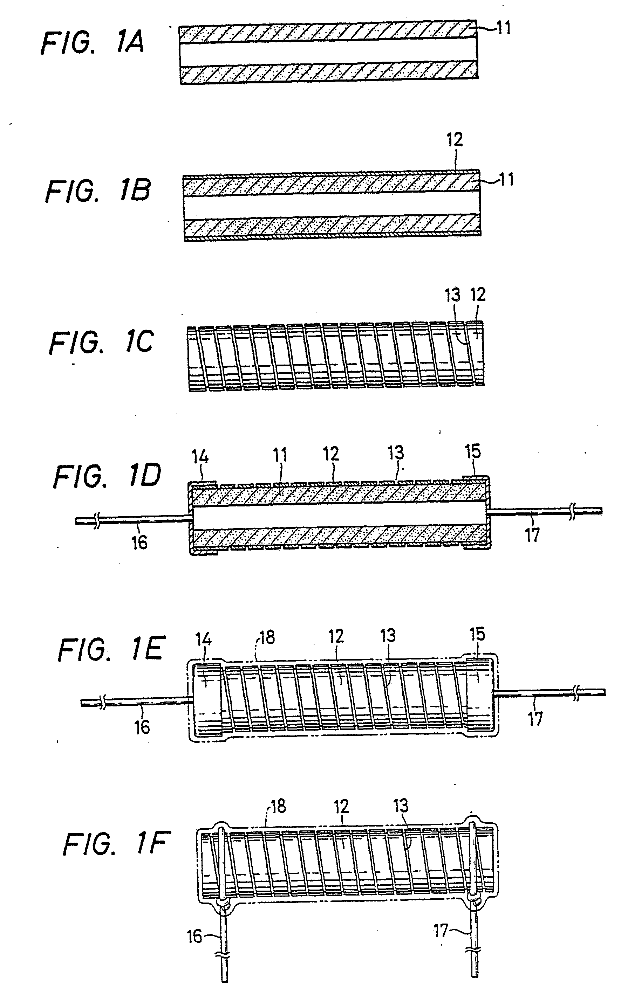

In the present invention, a platinum thin film is deposited on an insulating substrate of a smooth surface, which is formed by transparent fused quartz, hard glass capable of standing temperatures higher than 1000°C or porcelain. The unevenness of the surface of the insulating substrate, if any, is made smaller than the thickness of the platinum film to be formed thereon. As the insulating substrate, use is made of such a cylindrical insulating substrate 11 as shown in Figure 1A. After being sufficiently washed and dried, the insulating substrate 11 is heated at 1000°C or so in a furnace so that adsorbed gases and water are completely released from the substrate 11. Then, the insulating substrate 11 is put in a sputtering equipment, wherein it is subjected to sputtering of platinum while being rotated about its axis by means of a rotating jig, by which a platinum thin film 12 is deposited uniformly all over the outer peripheral surface of the insulating substrate 11, as shown in Figure 1B. The platinum thin film 12 has a purity of 99.999% or more. For the above sputtering, a sputtering equipment can be employed and the sputtering condition is such that when a platinum target and the insulating substrate 11 are spaced 1 cm apart, use is made of an ionic current of 10 mA or more with 1.4 KV, that is, the sputtering power of 0.7 W/cm², preferably, 0.8 W/cm² or more. The sputtering time depends on the thickness of the platinum thin film 12 desired to obtain; usually, the sputtering is carried out for approximately an hour to an hour and a half.

The platinum thin film thus formed by sputtering is unstable if it is left untreated. Then, the insulating substrate 11 deposited with the platinum thin film 12 is subjected to heat aging in an electric furnace, in which it is heated up to 1000°C raising the temperature, for example, from 100°C by steps of 100°C at one-hour intervals.

After the heat aging, a spiral-shaped kerf 13 is cut by a diamond cutter or laser cutter in the platinum thin film 12 to increase its resistance value. The pitch of the kerf 13 is dependent on the resistance value desired to obtain. By the formation of the kerf 13 the resistance value can be raised in the order of 1000 times. From the viewpoint of increasing the resistance value by the formation of the kerf 13, it is preferred that the thickness of the platinum thin film 12 be at least about 10 mm (0.01 $\mu$m) or more. Too large a thickness of the platinum thin film 12 takes much time for sputtering to lower the productivity and increases the amount of platinum used, and hence is not preferred from the economical point of view. Further, for raising the resistance value, too, it is desirable that the thickness of the platinum thin film 12 is not so large; it is considered that a maximum thickness is approximately 100 mm (0.1 $\mu$m).

Following the formation of the kerf 13, lead wires are connected to both ends of the platinum thin film 12. For example, as depicted in Figure 1D, caps 14 and 15 of a corrosion resisting metal such as stainless steel are press-fitted and fixed onto the marginal portions of the platinum thin film 12 on both end portions of the cylindrical insulating substrate 11. Then, heatproof lead wires 16 and 17, each produced, for example, by plating an iron wire with copper and then nickel, are connected at one end, as by spot welding, to the centers of the outer end faces of the caps 14 and 15, respectively, through which the lead wires 16 and 17 are electrically connected to the platinum thin film 12. As illustrated in Figure 1E, a protective film 18 is formed to a thickness of about 10 to 15 $\mu$m all over the platinum film 12 and the caps 14 and 15 by baking a heat-resisting wet-proof, insulating resin paint as of the polyimid or silicon system.

The lead wires 16 and 17 may be attached, for instance, in the manner shown in Figure 1F, too, in which the lead wires 16 and 17 of platinum are wound on the platinum thin film 12 on the both end portions of the insulating substrate 11 and then a platinum paste is baked thereon to connect the lead wires 16 and 17 to the platinum thin film 12 and fix them to the insulating substrate 11.

In the sputtering of platinum, when the sputtering power was smaller than 0.7 W/cm², for example, 0.53 W/cm² with an ionic current of 8 mA and a voltage of 1.4 KV, platinum particles were not firmly deposited by sputtering on the insulating substrate. As compared with the case of an 11 mA ionic current, the quantity of gas adsorbed to the platinum particles was large to make the platinum film sparse and thick, containing many pores around the platinum particles, and the resistance value was as large as 70 to 80Ω (in the case of the 11 mA ionic current, 20 to 30Ω). And in the course of heat aging, the platinum particles were dispersed together with the adsorbed gas, resulting in the resistance value becoming 200Ω to infinity. In the case where the ionic current was 11 mA, however, the adsorbed gas in the platinum thin film was released by the heat aging and the platinum thin film became a thin, continuous or solid film with a resistance value of 1.7 to 2.0Ω. As will be appreciated from the above, the platinum thin film 12 cannot be formed with the sputtering power of less than 0.70 W/cm².

The platinum thin film deposited by sputtering on the insulating substrate is an assembly of platinum particles and contains gas around them, which gas is released by the heat aging from the platinum thin film to make it a continuous, solid film. Shown in the following are variations in the resistance value and temperature coefficient of the platinum thin film during the heat aging in the case of sputtering platinum on the outer peripheral surface of an insulating substrate 2.5 mm in diameter and 7 mm long using a voltage of 1.5 KV and an ionic current of 11 mA.

2

|  | Resistance value | Temperature coefficient |
|---|---|---|
| Immediately after sputtering | 24Ω | 2260 PPM |
| 100°C an hour | 24Ω | 2370 PPM |
| 100 to 400°C (raised by steps of 100°C at 1-hour intervals) | 16Ω | 2700 PPM |
| 100 to 600°C (,,) | 6Ω | 2860 PPM |
| 100 to 800°C (,,) | 2.0Ω | 3660 PPM |
| 100 to 1000°C (,,) | 2.0Ω | 3680 PPM |

As is evident from the above, when the heat aging is carried out up to 800°C raising the heating temperature by steps of 100°C at one-hour intervals, the resistance value becomes constant and, in this respect, such heat aging is satisfactory; in terms of the temperature coefficient, however, it is preferred that the heat aging be conducted up to 1000°C.

For testing the stability of the resistance value of the platinum thin film 12, samples were produced by heat-aging platinum thin films of the same lot through various methods, attaching the caps 14 and 15 and the lead wires 16 and 17, forming the spiral kerf 13 to provide a resistance value of about 1000Ω and then forming the protective film 18. The samples were each subjected to a temperature cycle test for 30 minutes at −50 to 200°C five times and their resistance values at 0°C were measured before and after the tests to check the stability of the resistance value.

| Heat aging method | Result of stability test | Dispersion in temperature coefficient |
|---|---|---|
| ① 100 to 1000°C (raised by steps of 100°C at 40-minute intervals) | −0.3% | ±0.6% |
| ② 100 to 1000°C (raised by steps of 100°C at 1-hour intervals) | −0.01% | ±0.3% |
| ③ 100 to 1000°C (raised by steps of 100°C at 1.5-hour intervals) | −0.01% | ±0.2% |
| ④ 100 to 1000°C (raised by steps of 100°C at 2-hour intervals) | −0.01% | ±0.2% |
| ⑤ 200 to 800°C (raised by steps of 200°C at 2-hour intervals) | −0.7% | ±1.0% |
| ⑥ 200 to 1000°C (raised at steps of 200°C by 2-hour intervals) | −0.4% | ±1.0% |
| ⑦ 400 to 800°C (raised by steps of 100°C at 2-hour intervals) | −0.8% | ±2.3% |
| ⑧ 400 to 1000°C (raised by steps of 100°C at 1-hour intervals) | −0.5% | ±1.8% |

The above indicates that the aging methods ②, ③ and ④ provide a high degree of stability in the resistance value and hence are preferred.

**0 063 264**

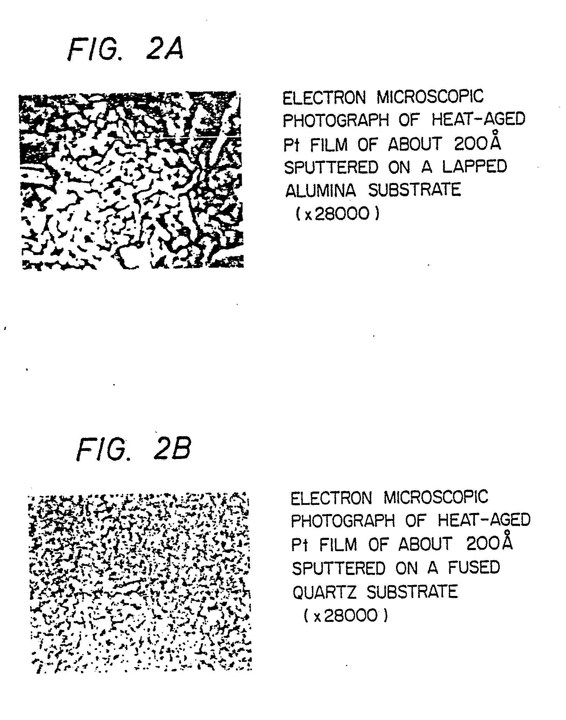

As referred to previously, it is preferred that the platinum thin film be about 10 to 100 mm (0.01 to 0.1 $\mu$m) thick; therefore, the unevenness of the surface of the insulating substrate 11 is held less than 1.1 $\mu$m. For example, in the case of an alumina substrate, crystals of alumina are several $\mu$ meters in size and even if lapped, the surface of the alumina substrate still has an unevenness of 0.5 $\mu$m or so. Figure 2A is a photo-micrograph of a platinum thin film formed on such an alumina substrate and heat-aged. Figure 2B is a photo-micrograph of a platinum thin film deposited on a transparent fused quartz substrate and heat-aged. It appears from Figure 2B that the platinum thin film is formed uniformly as compared with the thin film shown in Figure 2A. The platinum thin films were about 20 mm in either case (0.02 $\mu$m).

The platinum thin film resistance element obtained as described in the foregoing is stable chemically and exhibits a positive linear temperature-resistance characteristic and, in addition, it can be set by a suitable selection of the pitch of the kerf 13 to a resistance value, for example ranging from several tens of ohms to scores of kilo-ohms. By setting such a high resistance value, the accuracy of temperature measurement can be enhanced and the resistances of the lead wires can be neglected; accordingly, no compensation is needed for the lead-wire resistances, permitting simplification of the measuring circuit arrangement. Moreover, since the platinum thin film 12 is deposited on the insulating substrate 11, there is no likelihood that the film slips out of position due to a mechanical vibration and shock unlike a winding wrapped around an insulating substrate in the prior art; furthermore, the deposition of the platinum thin film on the insulating substrate is more excellent in mass-productivity than the winding of a thin platinum wire on the insulating body and allows ease in the production of resistance elements free from dispersion in the resistance value and temperature coefficient.

For example, the platinum thin film resistance element of the present invention, which has a resistance value of 10 K$\Omega$ at 0°C and in which the resistance ratio between 100 and 0°C is 1.3000, has the following temperature-resistance characteristic:

| | | | |
|---|---|---|---|
| −100°C | 6,998$\Omega$ | +50°C | 11,500$\Omega$ |
| −50°C | 8,499$\Omega$ | +75°C | 12,250$\Omega$ |
| −25°C | 9,250$\Omega$ | +100°C | 13,000$\Omega$ |
| 0°C | 10,000$\Omega$ | +125°C | 13,750$\Omega$ |
| +25°C | 10,750$\Omega$ | +150°C | 14,500$\Omega$ |

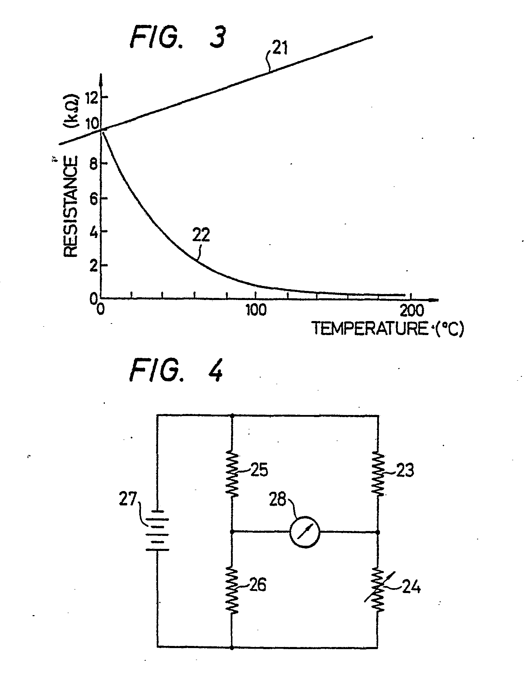

In this case, the temperature-resistance characteristic is almost linear, as indicated by the line 21 in Figure 3. In a thermistor heretofore employed for measuring a small temperature change, a resistance variation/°C at −25°C and a resistance variation/°C at 50 and 100°C are entirely different, as is evident from the curve 22 in Figure 3. In addition to this, because of secular change and hysteresis, the conventional thermistor is poor in reproducibility and hence is not utterly reliable and not accurate as a temperature measuring instrument. In contrast thereto, the platinum thin film resistance element has substantially the same temperature coefficient over the temperature range from −100 to 200°C, as mentioned above; accordingly, a resistance variation/°C at any temperature within the range of −100 in 200°C is 30$\Omega$ and it is 3.0$\Omega$ per 0.1°C. This indicates that even if the temperature coefficient slightly decreases, the resulting resistance variation remains below an error range. Such a large resistance variation could not have been taken out by a conventional 100$\Omega$ platinum resistance thermometer.

In the case of applying the platinum thin film resistance element of the present invention to a temperature measuring instrument, use is made of a bridge circuit arrangement such, for example, as shown in Figure 4, as is the case with kind of temperature measuring instrument hitherto employed. In Figure 4, a platinum thin film resistance element 23 and a variable resistor 24 the temperature coefficient of which is substantially zero are connected in series; a series circuit of resistors 25 and 26 is connected in parallel to the above series circuit; a power source 27 is connected across the second-mentioned series circuit; an ammeter, voltmeter or like indicator is connected between the connection point of the resistance element 23 and the resistor 24 and the connection point of the resistors 25 and 26. The resistance value of the resistor 24 is set, for instance, to 0°C in agreement with the resistance value of the platinum thin film resistance element 23. The resistance values of the resistors 25 and 26 are selected equal to each other. The resistor 24 is formed, for example, of a manganin wire (Cu 83 to 86%, Mn 12 to 15% and Ni 2 to 4%). The temperature coefficient of this wire is about 50 PPM in the temperature range of −100 to +200°C, and consequently, when the resistance value of the resistance element 23 is 10$\Omega$, a resistance variation per 0.1°C is less than 0.01$\Omega$, which is negligible relative to the 3.0$\Omega$ resistance change of the platinum thin film resistance element 23 per 0.1°C. Thus the use of the platinum thin film resistance element of the present invention permits highly accurate temperature measurements. In the case of employing the platinum thin film resistance element for temperature

5

**0 063 264**

measurements, the insulating substrate 11 is formed, for example, about 2.8 mm in diameter and about 10 mm long so as to provide for enhanced accuracy in the measurement.

## Claims

1. A method for the manufacture of a temperature sensitive thin film resistance element, which comprises the steps of forming a platinum thin film (12) by sputtering on a heatproof insulating substrate (11), heating the platinum thin film (12), forming a kerf (13) in the platinum thin film (12) to increase its resistance value, and attaching to the insulating substrate (11) a pair of lead wires (16, 17) connected to the platinum thin film, characterised in that the platinum thin film (12) is sputtered on the substrate (11) with a power of at least 0,7 W/cm², preferably 0,8 W/cm² or more to a thickness of 10 to 100 nm, that the platinum thin film (12) is heat-aged by heating it from about 100°C up to about 1000°C=in a step wise manner and that the kerf (13) is formed in the heat-aged platinum thin film (12).

2. A method for the manufacture of a platinum thin film resistance element according to claim 1 wherein the heat aging is performed by raising the temperature by steps of about 100°C at intervals of at least about an hour.

## Patentansprüche

1. Verfahren zur Herstellung eines temperaturempfindlichen Dünnfilmwiderstandselements, das die Schritte umfaßt des Ausbildens eines Platindünnfilms (12) mittels Aufsprühens auf ein hitzebeständiges, isolierendes Substrat (11), des Erhitzens des Platindünnfilms (12), des Ausbildens einer Kerbe (13) in dem Platindünnfilm (12) zur Erhöhung seines Widerstandswerts und des Anbringens eines Paares von mit dem Platindünnfilm verbundenen Leitungsdrähten (16, 17) an dem isolierenden Substrat (11), dadurch gekennzeichnet, daß der Platindünnfilm (12) auf das Substrat (11) mit einer Leistung von wenigstens 0,7 W/cm², vorzugsweise 0,8 W/cm² oder mehr bis zu einer Dicke auf 10 bis 100 nm aufgesprüht wird, daß der Platindünnfilm (12) durch schrittweises Erhitzen von etwa 100°C auf etwa 1000°C wärmegealterten wird und daß die Kerbe (13) in dem wärmegealterten Platindünnfilm (12) ausgebildet wird.

2. Verfahren zur Herstellung eines Platindünnfilmwiderstandselements nach Anspruch 1, bei dem die Wärmealterung durchgeführt wird durch Erhöhung der Temperatur in Schritten von etwa 100°C in Abständen von wenigstens etwa einer Stunde.

## Revendications

1. Procédé pour la réalisation d'un élément résistif à couche mince en platine sensible à la température, qui comprend les étapes consistant à former une couche mince de platine (12) par pulvérisation sur un substrat isolant (11) résistant à la chaleur, à chauffer la couche mince de platine (12), à former une entaille (13) dans la couche mince de platine (12) pour augmenter sa résistance, et à fixer au substrat isolant (11) une paire de fils d'amenée (16, 17) connectés à la couche minde de platine, caractérisé en ce que la couche mince de platine (12) est pulvérisée sur le substrat (11) avec une puissance d'au moins 0,7 W/cm², de préférence 0,8 W/cm² ou plus, jusqu'à une épaisseur de 10 à 100 nm, que la couche mince de platine (12) subit un vieillissement thermique par chauffage d'environ 100°C à environ 1000°C, par paliers, et que l'entaille (13) est formée dans la couche mince de platine (12) ayant subi un vieillissement thermique.

2. Procédé pour la réalisation d'un élément résistif à couche mince de platine selon la revendication 1, où le vieillissement thermique est réalisé par élévation de la température par paliers d'environ 100°C à des intervalles d'au moins environ une heure.

*FIG. 1A*

*FIG. 1B*

*FIG. 1C*

*FIG. 1D*

*FIG. 1E*

*FIG. 1F*

## FIG. 2A

ELECTRON MICROSCOPIC
PHOTOGRAPH OF HEAT-AGED
Pt FILM OF ABOUT 200Å
SPUTTERED ON A LAPPED
ALUMINA SUBSTRATE
(×28000)

## FIG. 2B

ELECTRON MICROSCOPIC
PHOTOGRAPH OF HEAT-AGED
Pt FILM OF ABOUT 200Å
SPUTTERED ON A FUSED
QUARTZ SUBSTRATE
(×28000)

FIG. 3

FIG. 4